# EUROPÄISCHE PATENTSCHRIFT

(11) **EP 3 487 793 B1**
(45) Veröffentlichungstag und Bekanntmachung des Hinweises auf die Patenterteilung: **15.04.2020**
(21) Anmeldenummer: 17751602.8
(22) Anmeldetag: 19.07.2017
(51) Int. Cl.: B65G 33/02, B02C 18/22, B65G 33/24

(54) **FÖRDERVORRICHTUNG MIT EINER GEZACKTEN SCHLAGLEISTE**
CONVEYING APPARATUS HAVING A SERRATED IMPACT BAR
DISPOSITIF DE TRANSPORT COMPRENANT UN BATTOIR DENTELÉ

(30) Priorität: 20.07.2016 DE 202016103944 U
(43) Veröffentlichungstag der Anmeldung: 29.05.2019
(73) Patentinhaber: STF Maschinen- & Anlagenbau GmbH, 94529 Aicha vorm Wald (DE)
(72) Erfinder: SÖLLNER, Josef, 94529 Aicha vorm Wald (DE)
(74) Vertreter: Gustorf, Gerhard
(86) Internationale Anmeldenummer: PCT/DE2017/100599
(87) Internationale Veröffentlichungsnummer: WO 2018/014913

(56) Entgegenhaltungen:
- DE-A1-102010 036 761
- DE-A1-102014 105 889
- US-A- 2 656 122
- US-A- 2 844 332
- US-A- 5 368 153

## Beschreibung

Die Erfindung betrifft eine Fördervorrichtung für zähes Stückgut, insbesondere plattgedrückte Flaschen aus Kunststoff, Becher, Schalen oder dergleichen in einer Recyclinganlage mittels eines eine Höhe überwindenden Stetigförderers nach dem Oberbegriff des Anspruchs 1.

In Recyclinganlagen für die Aufbereitung und Wiederverwendung von Wertstoffen durchlaufen diese mehrere Stationen, die über Stetigförderer miteinander verbunden sind. Die Stetigförderer bestehen hierbei aus horizontal oder schräg ausgerichteten Bandförderern, die die einzelnen Stationen zum Sortieren, beispielsweise nach Farben, Waschen, Reinigen und Trocknen miteinander verbinden. Am Ende dieser Bearbeitungskette werden die in der beschriebenen Weise aufbereiteten Wertstoffe einer Mühle zugeführt, deren Einfülltrichter in einer vorbestimmten Höhe zu beschicken ist.

Bei der Bearbeitung von sogenannten PET-Flaschen aus Polyethylenterephthalat besteht auch der letzte Förderstrang aus schräg nach oben führenden Bandförderern, mit denen die Flaschen nach der Reinigung, der Farbsortierung, dem Entfernen von Etiketten und dem Pressen in eine flache Form auf eine Höhe von etwa 10 m transportiert werden müssen, wo vor der Beschickung des Einfülltrichters in die Mühle noch eine manuell zu bedienende, waagrechte Strecke zum Aussondern von Ausschuss vorgesehen ist, beispielsweise von nicht für die Mühle bestimmten Gegenständen. Da der Steigungswinkel dieser Schrägförderung etwa 30° nicht übersteigen darf, um ein Zurückrollen der Flaschen zu vermeiden, beträgt die erforderliche, in der Ebene gemessene Länge des Schrägförderers über 10 m, um eine Höhe von 8 m zu erreichen. Das hat den Nachteil, dass für diese letzte Förderstrecke sehr viel Raum in der Recyclinganlage benötigt wird, der für andere Einrichtungen verloren ist und bei der Planung für den Fabrikationsbetrieb berücksichtigt werden muss.

Bisherige Versuche, diese letzte Förderstrecke durch den Einsatz von Schneckenförderern merklich zu verringern, haben allerdings zu dem Ergebnis geführt, dass vor allem plattgedrückte Kunststoffflaschen oder ähnliche Stückgüter aus zähem Werkstoff vor allem die Vertikalförderer verstopfen, weil es nicht zu verhindern ist, dass die plattgedrückten Gegenstände zwischen der Innenwand des Schneckengehäuses und der Förderschnecke verklemmen. Die Folge davon ist, dass die Anlage häufig abgeschaltet werden muss, um die eingeklemmten Gegenstände mühsam zu entfernen, was häufig nur unter großem Zeit- und Arbeitsaufwand möglich ist.

Aus DE 38 177 A ist es grundsätzlich bekannt, im zylindrischen Rohrgehäuse eines Vertikalförderers Anschlagschienen anzubringen, die ein Mitdrehen des zu hebenden Gutes, z. B. Braunkohle, verhindern sollen. Eine ähnliche Vorrichtung ist aus JP 2004 - 075 369 A bekannt. Beide Systeme betreffen aber die Förderung von Feststoffen, bei denen die Gefahr eines Verklemmens von zähem Stückgut nicht vorhanden ist.

Eine Fördervorrichtung für zähes Stückgut, insbesondere plattgedrückte Kunststoffflaschen nach dem Oberbegriff des Anspruchs 1 ist Gegenstand der DE 10 2014 105 889 A1. Diese beansprucht in der Ebene im Vergleich zu einem Schrägförderer erheblich weniger Platz, ohne dass Betriebsstörungen aufgrund von eingeklemmten Stückgütern zu befürchten sind. Aufgrund der Verengung im Rohrgehäuse des Vertikalförderers können auch plattgedrückte Stücke aus zähem Material nicht mehr zwischen der Förderschnecke und dem Rohrgehäuse verklemmen, da die Stücke an den vertikalen Mitnehmerleisten bei der Rotation der Förderschnecke vertikal nach oben abgelenkt werden, ohne in den Spalt zwischen der Förderschnecke und der Innenwand des Rohrgehäuses zu gelangen.

Aus US 5 368 153 ist eine Fördervorrichtung bekannt, die aus einem Horizontalförderer und einem Vertikalförderer mit Förderschnecke besteht, dessen Rohrgehäuse aus einem nicht teilbaren Rohr besteht, an dessen Innenwand rippenartige Vorsprünge fest angebracht sind.

Die DE 10 2010 036 761 A1 zeigt einen ähnlichen Vertikalförderer mit einem rohrförmigen Gehäuseschacht, dessen Innenwand zur Vorzerkleinerung des Gutes mit festen Wandvorsprüngen bestückt ist.

Der Erfindung liegt die Aufgabe zugrunde, den Vertikalförderer so auszubilden, dass die Mitnehmerleiste bei einem Verschleiß ihrer Schneidzähne rasch gewechselt werden kann.

Diese Aufgabe wird durch eine Fördervorrichtung nach Anspruch 1 gelöst. Die Fördervorrichtung weist eine Mitnehmerleiste auf, an deren beiden Längskanten Schneidezähne ausgebildet sind, und die zwischen den Klemmflanschen der Teilschalen durch Klemmschrauben auswechselbar befestigt ist, wobei Langlöcher für den Durchgriff der Klemmschrauben eine problemlose Einstellung der Mitnehmerleiste ermöglichen.

Durch die Schneidzähne wird das Gut, überwiegend plattgedrückte Kunststoffflaschen, in der Verengung zerrissen, wodurch der Förder- und Zerkleinerungsprozess optimiert wird. Außerdem haben die Zähne der Mitnehmerleisten die Wirkung, dass bereits bei der Förderung des Gutes Etiketten und anhaftender Schmutz abgelöst werden.

Dabei ist es von Vorteil, dass die auswechselbaren Mitnehmerleisten an beiden Längskanten Schneidzähne haben, so dass sie nach einem Verschleiß rasch gewendet werden können und damit mehrfach nutzbar sind.

Die Erfindung ist nachstehend an Ausführungsbeispielen erläutert, die in der Zeichnung dargestellt sind. In dieser zeigen:
Figur 1 einen schematischen Vertikalschnitt durch eine Fördervorrichtung gemäß der Erfindung,
Figur 2 eine Draufsicht auf die Fördervorrichtung der Figur 1,
Figur 3 einen Vertikalschnitt durch die Gehäusewand des Vertikalförderers, bei dem die Verengung durch eine Mitnehmerleiste gemäß der Erfindung gebildet wird,
Figur 4 einen Horizontalschnitt durch den Vertikalförderer in der Ebene IV-IV der Figur 3,
Figur 5 einen Längsschnitt durch ein Gehäuse nach einer Variante in der Ebene V - V der Figur 6,
Figur 6 einen Querschnitt durch das Gehäuse der Figur 5 und
Figur 7 eine verkleinerte Ansicht des Gehäuses der Figuren 5 und 6.

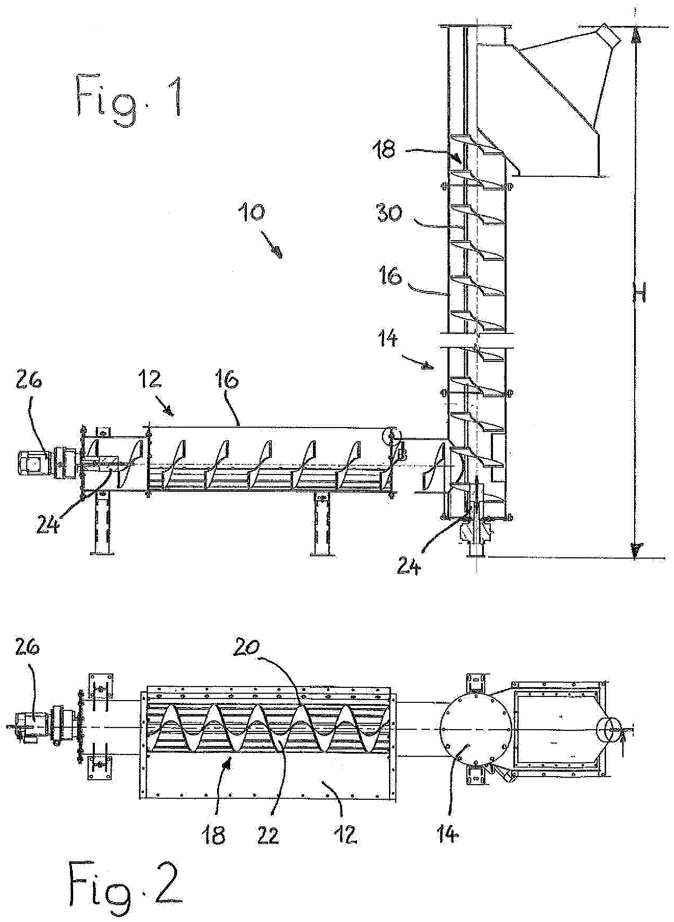

Die in den Figuren 1 und 2 dargestellte Fördervorrichtung 10 gemäß der Erfindung dient für den Transport von zähem Stückgut, insbesondere plattgedrückten Flaschen, Becher oder Schalen aus Kunststoff in einer Recyclinganlage. Sie ist als Stetigförderer ausgebildet, der eine bestimmte Höhe H (vgl. Figur 1) überwinden muss und der sich aus einem Horizontalförderer 12 und einem Vertikalförderer 14 zusammensetzt. Beide haben ein im Wesentlichen zylindrisches Rohrgehäuse 16, in dem jeweils eine Förderschnecke 18 gelagert ist, die gemäß Figur 2 als Förderspirale 20 mit einer wellenlosen Schraubenfläche 22 ausgebildet sein kann. Daneben ist es auch möglich, eine Förderspirale 20 mit einer axialen Schneckenwelle vorzusehen, was nicht dargestellt ist.

Wie in Figur 1 deutlich zu erkennen ist, sind beide Förderschnecken 18 in ihrem Rohrgehäuse 16 nur an einem Ende 24 drehbar gelagert, das mit der Antriebswelle eines Elektromotors 26 verbunden ist. Im Fall des Vertikalförderers 14 ist, wie aus Figur 1 zu entnehmen ist, das untere Ende 24 der Förderschnecke 18 gelagert. Der Antrieb des Vertikalförderers 14 kann alternativ auch am oberen Ende vorgesehen sein.

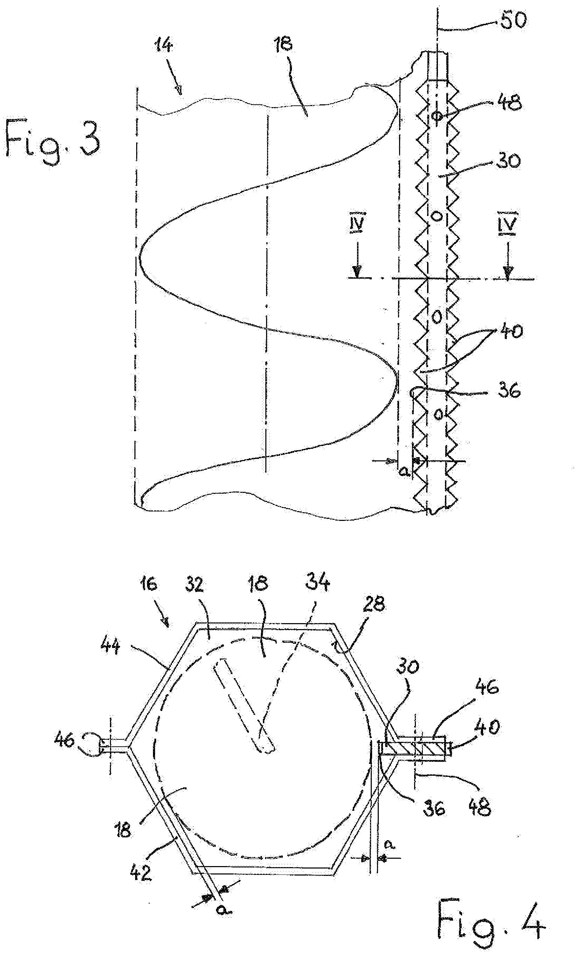

An der Innenwand 28 des Rohrgehäuses 16 des Vertikalförderers 14 sind zwei diametral gegenüberliegende Mitnehmerleisten 30 angebracht, die sich, wie Figur 1 zeigt, vertikal über die Höhe H des Rohrgehäuses 16 erstrecken. Zwischen der Mitnehmerleiste 30 und der Förderschnecke 18 bleibt ein lichter Abstand a frei (Fig. 3 und 4), der eine Verengung zum Flugkreis der Förderschnecke 18 bildet und auch am oberen Ende des Vertikalförderers 14 eine Berührung zwischen Förderschnecke 18 und Mitnehmerleiste 30 verhindert und somit für die optimale Laufruhe sorgt.

Im Querschnitt der Figur 4 ist angedeutet, dass in den Boden 32 des i.w. zylindrischen Rohrgehäuses 16 des Vertikalförderers 14 eine als Schlitz ausgebildetete Öffnung 34 eingearbeitet ist, durch die Fremdkörper, beispielsweise Metallspäne, Sand oder andere Verunreinigungen, nach unten austreten können.

Wie Figur 4 ferner zeigt, hat das Rohrgehäuse 16 für den Vertikalförderer 14 einen Polygonquerschnitt, beispielsweise sechseckig oder achteckig, wodurch der Durchmesser und damit die Förderleistung erhöht wird. Das Polygongehäuse 16 besteht aus ebenen Wandsegmenten 42, deren Abstand an der engsten Stelle zum gegenüberliegenden Flugkreis der Förderschnecke 18 eine Verengung mit dem Maß a bildet.

Aus Figur 4 geht weiter hervor, dass das Rohrgehäuse 16 mit Polygonquerschnitt aus zwei miteinander verbundenen Halbschalen 44 besteht, die über Klemmflansche 46 und schematisch angedeutete Klemmschrauben 48 lösbar miteinander verbunden sind. Im rechten Teil der Figuren 3 und 4 ist dargestellt, dass zwischen zwei miteinander verschraubten Klemmflanschen 46 eine vertikale Mitnehmerleiste 30 eingeschlossen ist, deren in das Gehäuse 16 ragende Längskante 36 die gewünschte Verengung zur Förderschnecke 18 bildet. An beiden Längskanten 36 der Mitnehmerleiste 30 sind Schneidzähne 40 ausgebildet, deren Spitzen einen Abstand a zum Flugkreis der Förderschnecke 18 haben. Da die Mitnehmerleiste 40 mittels der Klemmschrauben 48 zwischen den Klemmflanschen 46 befestigt ist, kann sie leicht ausgebaut und nach einer Drehung um die Hochachse 50 (Figur 3) oder um eine Querachse wieder eingesetzt werden, so dass die bisher nicht benutzten und noch scharfen Zähne 40 zum Einsatz kommen.

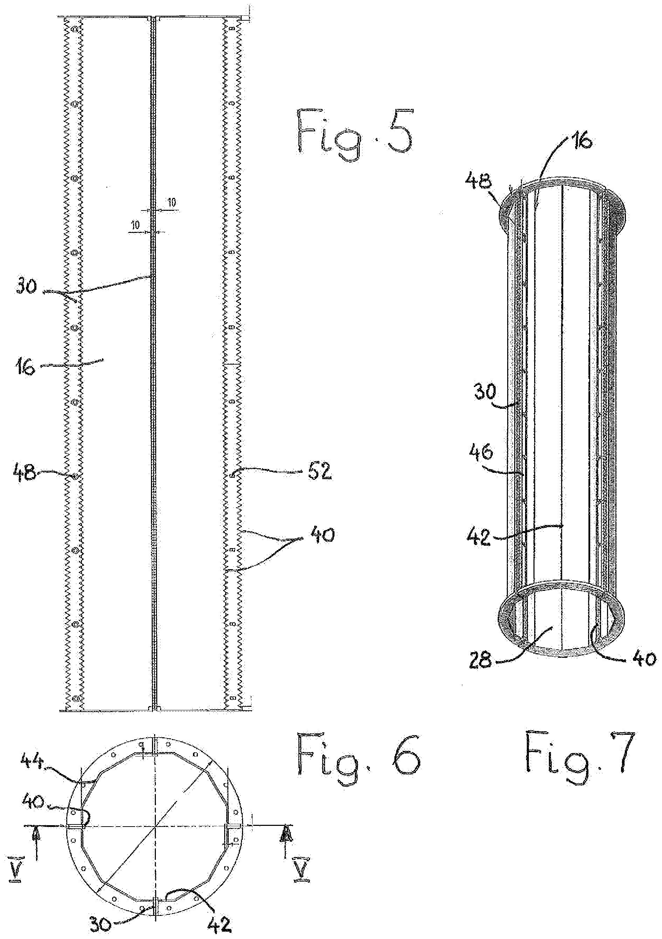

Das Ausführungsbeispiel der Figuren 5 bis 7 zeigt ein Rohrgehäuse 16, das hier nicht aus zwei Halbschalen besteht, sondern aus vier Teilschalen 44, die insgesamt vier Mitnehmerleisten 30 miteinander verklemmen. Die hierfür erforderlichen Klemmschrauben 48 greifen durch radial ausgerichtete Langlöcher 52, so dass die Mitnehmerleisten 30 in radialer Richtung verstellt werden können.

Die Teilschalen 44, die sich jeweils über einen Viertelkreis erstrecken, sind durch ihre Klemmflansche 46 so miteinander verbunden, dass die dadurch eingeschlossenen Mitnehmerleisten 30 in der Mitte eines ebenen Wandsegments 42 und damit an der engsten Stelle zwischen der Innenwand 28 des Rohrgehäuses 16 und der hier nicht dargestellten Förderschnecke 18 liegen.

## Patentansprüche

1. Fördervorrichtung, geeignet für zähes Stückgut, insbesondere plattgedrückte Kunststoffflaschen oder dergleichen in einer Recyclinganlage, umfassend einen eine Höhe überwindenden Stetigförderer, der aus einem Horizontalförderer (12) und einem damit verbundenen Vertikalförderer (14) zusammengesetzt ist, die beide ein Rohrgehäuse (16) haben, in dem jeweils eine Förderschnecke (18) drehbar gelagert ist, wobei zwischen der Innenwand (28) des Rohrgehäuses (16) des Vertikalförderers (14) und der zugeordneten Förderschnecke (18) wenigstens eine Verengung ausgebildet ist, die durch eine vertikale Mitnehmerleiste (30) gebildet wird, die über die Innenwand (28) des Rohrgehäuses (16) radial nach innen vorsteht und zu der Förderschnecke (18) einen Abstand (a) aufweist, wobei das Rohrgehäuse (16) einen Polygonquerschnitt mit ebenen Wandsegmenten (42) hat und aus miteinander verbundenen Teilschalen (44) besteht, die über Klemmflansche (46) miteinander verbunden sind, wobei zwischen je zwei Klemmflanschen (46) eine vertikale Mitnehmerleiste (30) eingeschlossen ist, und wobei die wenigstens eine Mitnehmerleiste (30) zu ihrer auswechselbaren Befestigung zwischen den Klemmflanschen (46) radial ausgerichtete Langlöcher (52) für den Durchgriff von Klemmschrauben (48) hat, **dadurch gekennzeichnet, dass** die wenigstens eine Mitnehmerleiste (30) an ihren beiden Längskanten (36) Schneidzähne (40) aufweist.

2. Fördervorrichtung nach Anspruch 1, **dadurch gekennzeichnet, dass** die wenigstens eine Mitnehmerleiste (30) an der engsten Stelle zwischen der Innenwand (28) des Rohrgehäuses (16) und der Förderschnecke (18) eingeklemmt ist.

3. Fördervorrichtung nach Anspruch 1 oder 2, **dadurch gekennzeichnet, dass** die Teilschalen (44) aus Halb- oder Viertelschalen bestehen.

## Claims

1. Conveying apparatus suitable for pieces of tough material, in particular collapsed plastic bottles or the like in a recycling plant, comprising a height surmounting continuous conveyor made up of a horizontal conveyor (12) coupled to a vertical conveyor (14), both having a tubular casing (16) in which a feed screw (18) is rotably mounted, wherein between the inner wall (28) of the tubular casing (16) of the vertical conveyor (14) and the corresponding feed screw (18) at least one narrowing gap is provided which is formed by a vertical catch bar (30) radially projecting inwardly from the inner wall (28) of the tubular casing (16) such that there is a distance (a) to the feed screw (18), wherein further the tubular casing (16) has a polygonal cross section with plane wall segments (42) and is composed of shell sections (44) connected to each other by clamping flanges (46) every two of them enclosing a vertical catch bar (30) at least one of which being provided with radially extending oblong holes (52) for the passage of clamping screws (48) interchangeably mounting said catch bar (30), **characterized in that** said at least one catch bar (30) is provided on both longitudinal edges (36) with cutting teeth (40).

2. Conveying apparatus according to claim 1 wherein said at least one catch bar (30) is fixed at the most narrow point between the inner wall (28) of the tubular casing (16) and the feed screw (18).

3. Conveying apparatus according to claim 1 or 2 wherein said shell sections (44) are constituted by semishells or quartershells.

## Revendications

1. Dispositif de transport apte à convoyer dans une installation de recyclage des charges isolées d'articles plus ou moins rigides, en particulier des bouteilles aplaties de matière plastique ou similaire, comprenant un convoyeur de manutention ascendante continue composé d'un convoyeur horizontal (12) relié à un convoyeur vertical (14), les deux ayant un carter tubulaire (16) dans lequel est montée une hélice transporteuse rotative (18), entre la paroi interne (28) du carter tubulaire (16) de convoyeur vertical (14) et l'hélice transporteuse (18) correspondante étant prévu au moins un rétrécissement formé par une baguette verticale d'entraînement (30) qui s'étend radialement vers l'intérieur à partir de la paroi interne (28) du carter tubulaire (16) et qui est située à une distance (a) de l'hélice transporteuse (18), le carter tubulaire (16) ayant une section transversale polygonale avec des segments plans de paroi (42) et étant composé de coques partielles (44) reliées l'une à l'autre par des brides de serrage (46) dont chaque paire enserre une baguette verticale d'entraînement (30) laquelle est munie de trous oblongs radiaux (52) pour le passage des vis de blocage (48) aptes à une fixation interchangeable de la baguette (30), **caractérisé par le fait que** la baguette d'entraînement (30) est munie sur les deux arêtes longitudinales (36) de dents coupantes (40).

2. Dispositif de transport selon la revendication 1, **caractérisé par le fait que** la baguette d'entraînement (30) est serrée dans la zone la plus étroite entre la paroi interne (28) du carter tubulaire (16) et l'hélice transporteuse (18).

3. Dispositif de transport selon la revendication 1 ou 2, **caractérisé par le fait que** les coques partielles (44) ont une structure semi-monocoque ou d'un quart de monocoque.
